# EUROPÄISCHE PATENTSCHRIFT

(11) **EP 3 640 623 B1**
(45) Veröffentlichungstag und Bekanntmachung des Hinweises auf die Patenterteilung: **25.08.2021**
(21) Anmeldenummer: 18201420.9
(22) Anmeldetag: 19.10.2018
(51) Int. Cl.: G01M 99/00, G01N 17/00

(54) **PRÜFKAMMER UND VERFAHREN ZUR TEMPERIERUNG VON PRÜFGUT**
TEST CHAMBER AND METHOD OF CONTROLLING TEMPERATURE OF TEST MATERIAL
CHAMBRE D'ESSAI ET PROCÉDÉ DE MISE EN TEMPÉRATURE DE PRODUIT D'ESSAI

(43) Veröffentlichungstag der Anmeldung: 22.04.2020
(73) Patentinhaber: Weiss Technik GmbH, 35447 Reiskirchen (DE)
(72) Erfinder: HAACK, Christian, 35037 Marburg (DE)
(74) Vertreter: advotec.

(56) Entgegenhaltungen:
- EP-A1- 3 244 186
- US-A1- 2003 108 082

## Beschreibung

Die Erfindung betrifft ein Verfahren zur Temperierung von Prüfgut in einer Prüfkammer sowie eine Prüfkammer, insbesondere Klimakammer wobei eine Einstellung einer Lufttemperatur in einem Prüfraum der Prüfkammer mittels einer Steuervorrichtung der Prüfkammer gesteuert wird, wobei in dem Prüfraum Prüfgut angeordnet und entsprechend einem vorbestimmten Prüfablauf in einem Prüfzeitabschnitt ein Temperaturwechsel im Prüfraum ausgebildet wird, wobei mittels eines Temperatursensors der Steuervorrichtung die Lufttemperatur in dem Prüfraum erfasst wird.

Bei der Temperatur-Klimaprüfung von Prüfgut werden regelmäßig Prüfkammern mit verschließbaren Prüfräumen eingesetzt, in denen zumindest eine Lufttemperatur und auch andere Umgebungsparameter einstellbar sind, um bestimmte klimatische und andere Umgebungsbedingungen simulieren zu können. Das Prüfgut wird dabei innerhalb eines Prüfablaufs bzw. eines Prüfzeitabschnittes der simulierten Umgebungsbedingungen ausgesetzt. Beispielsweise kann ein Prüfablauf auch mehrere Zeitabschnitte mit sukzessiven Temperaturwechseln umfassen. Derartige Prüfabläufe können sich regelmäßig über einen Zeitraum von Stunden oder Tagen erstrecken, sodass eventuelle Veränderungen des Prüfguts eintreten können, die durch die Prüfbedingungen bedingt sind. Eine Prüfkammer ist zur Überwachung dieser Umgebungsbedingungen mit einer Reihe von Sensoren ausgestattet.

Eine Temperierung, eines das zu prüfende Prüfgut aufnehmenden Prüfraums, erfolgt regelmäßig in einem Umluftkanal innerhalb des Prüfraums. Der Umluftkanal bildet einen Luftbehandlungsraum im Prüfraum aus, in dem Wärmetauscher bzw. Wärmeübertrager zur Erwärmung oder Kühlung der in den Umluftkanal bzw. Prüfraum durchströmenden Luft angeordnet sind. Dabei saugt ein Lüfter bzw. ein Ventilator die im Prüfraum befindliche Luft an und leitet sie im Umluftkanal zu den jeweiligen Wärmetauschern. Das Prüfgut kann so über die im Prüfraum ausgebildete Lufttemperatur temperiert oder auch einem definierten Temperaturwechsel ausgesetzt werden. Während eines Prüfintervalls kann dann beispielsweise eine Lufttemperatur zwischen einem Temperaturmaximum und einem Temperaturminimum der Prüfkammer wechseln. In dem Prüfraum kann eine Temperatur in einem Temperaturbereich von -80°C bis +180°C ausgebildet werden, wobei auch eine relative Luftfeuchte innerhalb des Prüfraums eingestellt werden kann. Die tatsächlichen klimatisches Bedingungen in dem Prüfraum werden dann mit entsprechenden Sensoren, für beispielsweise Lufttemperatur, Luftgeschwindigkeit und relative Luftfeuchte erfasst, um die gewünschten klimatischen Bedingungen einstellen zu können.

Insbesondere beeinflusst das Prüfgut selbst die Einstellungen einer Prüfbedingung innerhalb einer Prüfkammer. Darüber hinaus kann auch eine Luftströmung innerhalb des Prüfraums einen Einfluss auf die Einstellung einer Prüfbedingung an einen Prüfling haben. Da eine Erwärmung bzw. Abkühlung des Prüfguts im Rahmen eines vorbestimmten Prüfablaufs über die im Prüfraum ausgebildete Lufttemperatur erfolgt kann beispielsweise leichtes Prüfgut mit einer geringen Masse bzw. Wärmekapazität, welches von einer Luftströmung gut umströmt ist, vergleichsweise schnell einem Temperaturwechsel unterworfen werden. Prüfgut mit einer großen Masse und Wärmekapazität, welches darüber hinaus schlecht von einer Luftströmung umströmt wird kann nur vergleichsweise langsam umtemperiert werden. Weiter kann das Prüfgut auch, wenn es sich um eine beispielsweise elektrisch angetriebene Vorrichtung handelt, selbst für einen Eintrag von Wärme in dem Prüfraum sorgen, wodurch ein Temperaturwechsel des Prüfguts ebenfalls beeinflusst ist. Da mit einem vorbestimmten Prüfablauf stets auch das Prüfgut zur Durchführung der Prüfung einem thermischen Stress unterworfen werden soll, ist es von großer Bedeutung, dass die im Prüfablauf vorgesehenen Temperaturen an dem Prüfgut erzielt werden bzw. das Prüfgut auch vollständig temperiert wird. Dies kann jedoch aufgrund der zuvor beschriebenen Einflussfaktoren auf eine Temperatur des Prüfguts im Rahmen eines Prüfablaufs nicht verlässlich sichergestellt werden.

Es ist daher bekannt, Prüfgut mit Temperatursensoren zu versehen, die unmittelbar an dem Prüfgut angeordnet sind. Mit diesen Temperatursensoren ist es dann möglich eine Temperatur einer Oberfläche des Prüfguts zu bestimmen und so einen regelkonformen Prüfablauf zu überwachen. Auch ist es dann möglich einen Temperaturwechsel an den Temperaturwechsel beeinflussende Eigenschaften des Prüfguts anzupassen. Diese Überwachung und Anpassung des Prüfablaufs ist jedoch stets aufwendig, da Temperatursensoren zur Messung einer Oberflächentemperatur an dem Prüfgut angebracht werden müssen, die gegebenenfalls auch selbst einen Prüfablauf beeinflussen können. Darüber hinaus ist dann auch eine Anpassung des Prüfablaufs nach zumindest einer ersten Durchführung des Prüfablaufs erforderlich, wenn das Prüfgut nicht in der gewünschten Weise temperiert werden kann. Alleine die Durchführung einer verlässlichen Temperaturprüfung von Prüfgut ist daher umständlich und zeitintensiv. Auch benötigt ein Bedienpersonal entsprechende Erfahrungen in der Korrektur bzw. Anpassung von Prüfabläufen an verschiedene Arten von Prüfgut.

Ein Verfahren zur Temperaturmessung innerhalb eines Klimaprüfschranks mithilfe einer Wärmebildkamera bzw. eine Prüfkammer mit den Merkmalen des Oberbegriffs ist aus der EP 3 244 186 A1 bekannt. Die EP 3 244 186 A1 beschreibt einen Temperatursensor innerhalb eines Prüfraums des Klimaprüfschranks und die Möglichkeit, die Wärmebildkamera durch einen Abgleich mit dem Temperatursensor bzw. einer damit gemessenen Temperatur zu kalibrieren.

Die US 2003/108082 A1 beschreibt ein Dilatometer, bei dem eine optische Messung einer Temperaturausdehnung einer Probe durchgeführt wird. Insbesondere wird eine Kalibrierung des Dilatometers durch Messung einer Probe mit einer bekannten Wärmeausdehnung durchgeführt.

Der vorliegenden Erfindung liegt daher die Aufgabe zugrunde, ein Verfahren zur Temperierung von Prüfgut in einer Prüfkammer sowie eine Prüfkammer vorzuschlagen, das bzw. die eine einfache und kostengünstige Durchführung einer Temperaturprüfung von Prüfgut ermöglicht.

Diese Aufgabe wird durch ein Verfahren mit den Merkmalen des Anspruchs 1, einer Verwendung eines Temperatursensors mit den Merkmalen des Anspruchs 17 und einer Prüfkammer mit den Merkmalen des Anspruchs 18 gelöst.

Bei dem erfindungsgemäßen Verfahren zur Temperierung von Prüfgut in einer Prüfkammer, insbesondere Klimakammer, wird eine Einstellung einer Lufttemperatur in einem Prüfraum der Prüfkammer mittels einer Steuervorrichtung der Prüfkammer gesteuert, wobei in dem Prüfraum Prüfgut angeordnet und entsprechend einem vorbestimmten Prüfablauf in einem Prüfzeitabschnitt ein Temperaturwechsel im Prüfraum ausgebildet wird, wobei mittels eines Temperatursensors der Steuervorrichtung die Lufttemperatur in dem Prüfraum erfasst wird, wobei ein Temperaturverlauf der Lufttemperatur während des Prüfzeitabschnittes mit in dem Prüfraum angeordneten Prüfgut von der Steuervorrichtung erfasst und gespeichert wird, wobei in dem prüfgutfreien Prüfraum entsprechend dem vorbestimmten Prüfablauf in einem weiteren Prüfzeitabschnitt der Temperaturwechsel im Prüfraum ausgebildet wird, wobei ein weiterer Temperaturverlauf der Lufttemperatur während des weiteren Prüfzeitabschnittes mit dem prüfgutfreien Prüfraum von der Steuervorrichtung erfasst und gespeichert wird, wobei mittels der Steuervorrichtung ein Vergleich der jeweiligen Temperaturverläufe durchgeführt wird.

Bei dem erfindungsgemäßen Verfahren wird demnach Prüfgut in dem Prüfraum angeordnet und temperiert bzw. einem Temperaturwechsel ausgesetzt. Dies kann beispielsweise dadurch erfolgen, dass innerhalb eines definierten Zeitraums bzw. des Prüfzeitabschnittes eine konstant ausgebildete Lufttemperatur in dem Prüfraum auf ein abweichendes Temperaturniveau angehoben oder abgesenkt wird und dann wieder konstant über einen Zeitabschnitt gehalten wird. Der Temperaturwechsel kann dabei vergleichsweise schnell, beispielsweise als ein Temperatursprung oder auch innerhalb eines Zeitabschnittes kontinuierlich erfolgen. Der Temperatursensor der Steuervorrichtung misst dabei die Lufttemperatur in dem Prüfraum um sicherzustellen, dass auch die gewünschte für den Prüfablauf erforderliche Lufttemperatur in dem Prüfraum von der Steuervorrichtung eingestellt wird. Im Rahmen des jeweiligen Prüfablaufs kann das Prüfgut so definierten Prüfbedingungen unterworfen werden, beispielsweise um das Prüfgut einer thermischen Belastung auszusetzen. Der Temperatursensor, der zur Regelung der Lufttemperatur in dem Prüfraum dient, wird weiter dazu genutzt, den Temperaturverlauf der Lufttemperatur während des Prüfzeitabschnittes mit in dem Prüfraum angeordnetem Prüfgut zu erfassen und zu speichern. Vor oder nach der Durchführung des Prüfablaufs mit dem Prüfgut wird der gleiche, vorbestimmte Prüfablauf mit der Prüfkammer durchgeführt, ohne dass sich Prüfgut in dem Prüfraum befindet. In diesem weiteren Prüfzeitabschnitt dieses vorbestimmten Prüfablaufs wird ein sich durch den Prüfablauf ergebender weiterer Temperaturverlauf der Lufttemperatur ebenfalls mittels des Temperatursensors gemessen bzw. erfasst und gespeichert. Der weitere Prüfzeitabschnitt ist dabei von gleicher Dauer wie der Prüfzeitabschnitt. Auch erfolgt die Regelung der Lufttemperatur in dem Prüfraum entsprechend dem vorgegebenen Prüfablauf. Da sich in dem weiteren Prüfzeitabschnitt in dem Prüfraum kein Prüfgut befindet, ergibt sich der weitere Temperaturverlauf der Lufttemperatur, der von der Abwesenheit von Prüfgut beeinflusst ist, und sich von dem Temperaturverlauf mit im Prüfraum befindlichen Prüfgut unterscheidet.

Da die Steuervorrichtung beide Temperaturverläufe erfasst und speichert kann die Steuervorrichtung einen Vergleich der jeweiligen Temperaturverläufe für übereinstimmende Prüfabläufe durchführen. Der Vergleich kann einfach bereits dadurch durchgeführt werden, dass die Steuervorrichtung an einem Anzeigegerät, welches ein zur Steuervorrichtung gehöriger Bildschirm oder auch ein Bildschirm eines externen Computers sein kann, die Temperaturverläufe nebeneinander oder in einem gemeinsamen Diagramm darstellt. Auch kann die Steuervorrichtung die jeweiligen nummerischen Werte der Temperaturverläufe in einem Vergleich, beispielsweise in Art einer Tabelle, ausgeben. Eine Bedienperson der Prüfkammer ist dann in der Lage, anhand des Vergleichs festzustellen, inwieweit das Prüfgut den vorbestimmten Prüfablauf beeinflusst. Bei beispielsweise einer Erwärmung von Prüfgut in einem Prüfzeitabschnitt kann die Erwärmung der Lufttemperatur in dem Prüfraum entsprechend des jeweiligen Temperaturverlaufs gegenüber dem prüfgutfreien Prüfraum verzögert sein, wenn das Prüfgut eine große Masse aufweist. Dies könnte beispielsweise dazu führen, dass das Prüfgut im Rahmen des vorgesehenen Prüfablaufs nicht ausreichend erwärmt wird, bis wieder eine Abkühlung des Prüfguts erfolgt. Eine Bedienperson kann nun eine Geschwindigkeit einer Erwärmung entsprechend anpassen, um das betreffende Prüfkriterium im Rahmen des Prüfablaufs zu erfüllen. Gegebenenfalls kann auch festgestellt werden, dass die betreffende Prüfkammer überhaupt nicht zur Durchführung des vorbestimmten Prüfablaufs dem spezifischen Prüfgut geeignet ist. So kann mit dem erfindungsgemäßen Verfahren stets sicher festgestellt werden, ob der vorbestimmte Prüfablauf mit den jeweiligen Temperaturwechseln an dem Prüfgut in der gewünschten Weise durchgeführt wird, ohne dass zusätzliche Temperatursensoren an dem Prüfgut angebracht werden müssten.

Vorteilhaft kann die Steuervorrichtung eine Differenz der jeweiligen Temperaurverläufe bestimmen. Die Differenz kann beispielsweise auch in Form einer Tabelle oder einer grafischen Darstellung von der Steuervorrichtung ausgegeben werden. Zur Berechnung der Differenz können die jeweiligen Temperaturverläufe für die Prüfzeitabschnitte gleicher Dauer innerhalb des vorbestimmenden Prüfablaufs auch einfach grafisch überlagert werden, beispielsweise innerhalb eines Temperatur-Zeit-Graph.

Die Steuervorrichtung kann eine Geschwindigkeit und/oder eine Regelabweichung des Temperaturwechsels bzw. des Temperaturverlaufs bestimmen. Anhand des Vergleichs der jeweiligen Temperaturverläufe kann die Steuervorrichtung feststellen, ob ein Temperaturwechsel eines Temperaturverlaufs mit Prüfgut im Prüfraum vergleichsweise schneller oder langsamer erfolgt im Vergleich zu einem Temperaturwechsel eines Temperaturverlaufs ohne Prüfgut im Prüfraum. Alternativ oder ergänzend kann die Steuervorrichtung eine Regelabweichung eines derartigen Temperaturwechsels bestimmen, wobei sich die Regelabweichung regelmäßig durch ein Einschwingen einer realen Ist-Lufttemperatur relativ zu einer von der Steuervorrichtung vorgegebenen Soll-Lufttemperatur ergibt. Die Regelabweichung kann beispielsweise ein Überschwingen oder auch eine stetige Annäherung einer Temperaturkurve des Temperaturverlaufs sein.

So kann vorteilhaft der Vergleich der Temperaturverläufe für die jeweiligen Geschwindigkeiten und/oder Regelabweichungen der Temperaturwechsel durchgeführt werden. Beispielsweise kann im Rahmen einer Erwärmung der Lufttemperatur im Prüfraum Prüfgut, welches beispielsweise elektrisch betrieben wird, ein Überschwingen des Temperaturverlaufs bewirken, da dieses Prüfgut dann gegebenenfalls zu schnell erwärmt wird. Bei einer Abkühlung wird möglicherweise aufgrund der Wärmeentwicklung des Prüfguts bzw. dem Wärmeeintrag durch das Prüfgut eine Soll-Temperatur nur sehr langsam erreicht. Durch den Vergleich der jeweiligen Temperaturverläufe kann dann festgestellt werden, ob eine Anpassung des vorbestimmten Prüfbablaufs zur Erzielung der gewünschten Temperaturen des Prüfguts erforderlich ist.

Die Steuervorrichtung kann auch anhand der Geschwindigkeit und/oder Regelabweichung des Temperaturwechsels eine relative Wärmekapazität des Prüfguts bestimmen. So wird sich sehr leichtes bzw. dünnes, mit Luft gut umströmtes Prüfgut vergleichsweise schnell umtemperieren lassen, wobei dickwandiges Prüfgut mit großer Masse, welches schlecht von Luft umströmt ist, sich nur vergleichsweise langsam umtemperieren lässt. Aus dem Verhalten des jeweiligen Prüfguts, welches den Temperaturverlauf der Lufttemepratur in dem Prüfzeitabschnitt beeinflusst, kann die Wärmekapazität des Prüfguts bestimmt werden.

Die Steuervorrichtung kann anhand der Geschwindigkeit und/oder Regelabweichung des Temperaturwechsels eine Wärmeleistung des Prüfguts bestimmen. Da das Prüfgut selbst, wenn es sich um beispielsweise ein elektrisch betriebenes Gerät handelt, Wärme in den Prüfraum eintragen kann, kann anhand der Geschwindigkeit bzw. Regelabweichung des Temperaturwechsels leicht festgestellt werden, ob ein Wärmeeintrag erfolgt bzw. wie dieser den Prüfablauf beeinflusst. In allen Fällen ist eine Anpassung des Prüfablaufs an das jeweilige Prüfgut so einfacher möglich.

Darüber hinaus kann die Steuervorrichtung anhand der Geschwindigkeit und/oder der Regelabweichung des Temperaturwechsels eine Dauer einer konstanten Temperierung des Prüfguts in einem vorangehenden Prüfzeitabschnitt bestimmen. Wenn beispielsweise Prüfgut in dem vorangehenden Prüfzeitabschnitt nicht ausreichend temperiert wurde bzw. nicht vollständig die im Prüfablauf vorgesehene Temperatur angenommen hat, würde sich im anschließenden Prüfzeitabschnitt mit einem Temperaturwechsel schneller umtemperieren lassen. Dies ist insbesondere dann der Fall, wenn das Prüfgut eine vergleichsweise große Wärmekapazität aufweist. Ein schnelles Umtemperieren bzw. ein schneller Anstieg bzw. Abfall des Temperaturverlaufes in dem Prüfzeitabschnitt lässt bei Prüfgut mit großer Wärmekapazität dem Schluss zu, dass das Prüfgut in dem vorangehenden Prüfzeitabschnitt nicht vollständig, dem vorbestimmenden Prüfablauf entsprechend, umtemperiert wurde. Beispielsweise kann dann eine Verlängerung des vorangehenden Prüfzeitabschnittes vorgesehen werden.

Prinzipiell kann vorgesehen sein, dass der Temperaturwechsel von einer hohen Lufttemperatur zu einer niedrigen Lufttemperatur erfolgt oder umgekehrt von einer niedrigen Lufttemperatur zu einer hohen Lufttemperatur. Der Vergleich der jeweiligen Temperaturverläufe kann für beide Richtungen eines Temperaturwechsels durchgeführt werden. Auch kann vorgesehen sein, dass von einem Vergleich des einen Temperaturwechsels ein Verhalten bei einem anderen Temperaturwechsel bestimmt wird. Prüfgut mit hoher Wärmekapazität wird sich beispielsweise beim Erwärmen vergleichsweise so verhalten, wie beim Abkühlen. Bereits ein Vergleich der Temperaturverläufe für einen Temperaturwechsel ermöglicht daher eine Anpassung des vorbestimmenden Prüfablaufs mit mehreren Temperaturwechseln.

Den Lufttemperaturwerten können jeweils Zeitwerte innerhalb eines Prüfzeitabschnittes zugeordnet werden, wobei die Lufttemperaturwerte und die Zeitwerte als Messdatensätze in einer Speichereinrichtung der Steuervorrichtung gespeichert werden können. Eine Messung einer Lufttemperatur mittels des Temperatursensors kann kontinuierlich oder sukzessive erfolgen, wobei durch die Zuordnung der Zeitwerte zu den Lufttemperaturwerten ein Temperaturverlauf darstellbar wird. Die so ausgebildeten Messdatensätze von Temperaturverläufen können in der Speichervorrichtung der Steuervorrichtung gespeichert und nach Bedarf während oder nach der Durchführung eines Prüfablaufs für den Vergleich der jeweiligen Temperaturverläufe herangezogen werden. Auch ist es so möglich einen Prüfablauf zu dokumentieren.

In einem ersten Schritt kann der weitere Temperaturverlauf der Lufttemperatur während des weiteren Prüfzeitabschnittes mit dem prüfgutfreien Prüfraum und in einem zweiten Schritt des Verfahrens der Temperaturverlauf der Lufttemperatur während des Prüfzeitabschnittes mit den in dem Prüfraum angeordneten Prüfgut von der Steuervorrichtung erfasst und gespeichert werden. Demnach kann zunächst vorgesehen sein, den weiteren Temperaturverlauf des leeren Prüfraums zu bestimmen und nachfolgend den Temperaturverlauf des Prüfraums mit dem Prüfgut. So wird es möglich bei dem Prüfablauf mit dem Prüfgut bereits die jeweiligen Temperaturverläufe zu vergleichen.

Weiter kann anhand einer Datenbank der Steuervorrichtung eine Vielzahl unterschiedlicher Temperaturverläufe der Lufttemperatur während Prüfzeitabschnitten mit dem prüfgutfreien Prüfraum gespeichert werden. Die betreffenden Temperaturverläufe können unterschiedlichster Art sein, das heißt sich hinsichtlich Ist- und Soll-Lufttemperaturen bei einem Temperaturwechsel unterscheiden. Die Temperaturverläufe können sich auch hinsichtlich einer Geschwindigkeit eines Temperaturwechsels unterscheiden. Wenn diese Temperaturverläufe einmalig für einen bestimmten Typ einer Prüfkammer bestimmt wurden, können diese Temperaturverläufe in der Datenbank gespeichert sein, sodass alle Prüfkammern dieses Typs bereits die Informationen über die betreffenden Temperaturverläufe enthalten. Eine physische Nachbildung der betreffenden Temperaturverläufe mit dem prüfgutfreien Prüfraum ist dann nicht mehr erforderlich. Darüber hinaus kann vorgesehen sein, dass die betreffenden Temperaurverläufe an standardisierte Prüfabläufe angepasst sind, wie sie beispielsweise für bestimmte Produkte bzw. Prüfgut entsprechend einer Norm regelmäßig durchgeführt werden. Auch kann die Datenbank der Steuervorrichtung mit weiteren, individuell erstellten Prüfabläufen bzw. Temperaturverläufen ergänzt werden.

Mittels einer Regeleinrichtung der Steuervorrichtung kann während des Prüfzeitabschnittes mit dem in dem Prüfraum angeordneten Prüfgut die Lufttemperatur in dem Prüfraum in Abhängigkeit des Vergleichs angepasst werden. Damit kann dann beispielsweise auf eine Korrektur des Prüfablaufs durch eine Bedienperson verzichtet werden. Wird beispielsweise anhand des Vergleichs der Temperaturverläufe festgestellt, dass sich nur langsam umtemperierbares Prüfgut mit großer Wärmekapazität in dem Prüfraum befindet, kann die Regeleinrichtung vorsehen, dass eine Haltedauer einer Soll-Lufttemperatur verlängert wird, um sicherzustellen, dass das Prüfgut vollständig umtemperiert wird. Die Regeleinrichtung kann demnach aktiv den Prüfablauf verändern. Auch kann umgekehrt vorgesehen sein, dass die Regeleinrichtung Haltezeiten verkürzt, wenn sich beispielsweise das Prüfgut sehr schnell umtemperieren lässt. Der Prüfablauf wird dann schneller durchführbar.

Demnach kann die Regeleinrichtung in Abhängigkeit des Vergleichs eine Dauer einer konstanten Temperierung des Prüfguts in dem Prüfzeitabschnitt relativ verlängern oder verkürzen.

Weiter kann die Regeleinrichtung in Abhängigkeit des Vergleichs eine Geschwindigkeit des Temperaturwechsels der Lufttemperatur in dem Prüfraum in dem Prüfzeitabschnitt relativ vermindern oder erhöhen. Beispielsweise kann durch eine Erhöhung eine Geschwindigkeit des Temperaturwechsels der Lufttemperatur Prüfgut mit hoher Wärmekapazität schneller umtemperiert werden. Beispielsweise kann auch vorgesehen sein eine Aufheizgeschwindigkeit oder Abkühlgeschwindigkeit anhand von Vorzugswerten von 1, 3, 5, 10 oder 15K pro Minute mit einer entsprechenden Überlagerung eines vorgegebenen Toleranzbandes des Prüfablaufs zu ändern.

Mittels des Temperatursensors kann eine Lufttemperatur einer Zuluft und mittels eines weiteren Temperatursensors der Steuervorrichtung eine Lufttemperatur einer Abluft innerhalb des Prüfraums gemessen werden, wobei mittels der Steuervorrichtung eine Temperaturdifferenz der Lufttemperatur der Zuluft und der Lufttemperatur der Abluft innerhalb des Prüfzeitabschnittes erfasst, gespeichert und/oder verarbeitet werden kann. Prinzipiell wird sich die Lufttemperatur der Zuluft stets von der Lufttemperatur der Abluft unterscheiden. Dadurch dass die Steuervorrichtung die Temperaturdifferenz bestimmt, kann wiederum festgestellt werden, welchen Einfluss das im Prüfraum befindliche Prüfgut auf die die Temperaturdifferenz hat. Ist eine Temperaturdifferenz vergleichsweise klein, handelt es sich um Prüfgut mit geringer Wärmekapazität oder Prüfgut mit hoher Wärmekapazität, welches schlecht umströmt ist. Aus der Information der Temperaturdifferenz zwischen dem Temperatursensor und dem weiteren Temperatursensor kann das Verhalten des Prüfguts noch genauer bestimmt werden.

Mittels der Steuervorrichtung kann ein Vergleich der jeweiligen Temperaturverläufe der Lufttemperatur der Zuluft und ein Vergleich der jeweiligen Temperaturverläufe der Lufttemperatur der Abluft durchgeführt werden. Der Vergleich kann hier ebenfalls von der Steuervorrichtung grafisch ausgegeben werden, sodass die Temperaturverläufe für Zuluft und Abluft für jeweils Prüfräume mit und ohne Prüfgut in einem Diagramm dargestellt werden können.

Erfindungsgemäß wird ein Temperatursensor einer Steuervorrichtung einer Prüfkammer, insbesondere einer Klimakammer, zur Erfassung einer Lufttemperatur in einem Prüfraum der Prüfkammer und zur Durchführung des erfindungsgemäßen Verfahrens verwendet. Weitere Ausführungsformen einer Verwendung ergeben sich aus den auf den Verfahrensanspruch 1 zurückbezogenen Unteransprüchen.

Bei der erfindungsgemäßen Prüfkammer zur Temperierung von Prüfgut, insbesondere Klimakammer, ist eine Einstellung einer Lufttemperatur in einem Prüfraum der Prüfkammer mittels einer Steuervorrichtung der Prüfkammer steuerbar, wobei in dem Prüfraum Prüfgut anordbar und entsprechend einem vorbestimmenden Prüfablauf in einem Prüfzeitabschnitt ein Temperaturwechsel in Prüfraum ausbildbar ist, wobei mittels eines Temperatursensors der Steuervorrichtung die Lufttemperatur in dem Prüfraum erfassbar ist, wobei ein Temperaturverlauf der Lufttemperatur während des Prüfzeitabschnittes mit in dem Prüfraum angeordnetem Prüfgut von der Steuervorrichtung erfassbar und speicherbar ist, wobei in dem prüfgutfreien Prüfraum entsprechend dem vorbestimmten Prüfablauf in einem weiteren Prüfzeitabschnitt der Temperaturwechsel im Prüfraum ausbildbar ist, wobei ein weiterer Temperaturverlauf der Lufttemperatur während des weiteren Prüfzeitabschnittes mit dem prüfgutfreien Prüfraum von der Steuervorrichtung erfassbar und speicherbar ist, wobei mittels der Steuervorrichtung ein Vergleich der jeweiligen Temperaturverläufe durchführbar ist. Zu den vorteilhaften Wirkungen der erfindungsgemäßen Prüfkammer wird auf die Vorteilsbeschreibung des erfindungsgemäßen Verfahrens verwiesen.

Mittels einer Temperiervorrichtung der Prüfkammer kann eine Lufttemperatur in einem Temperaturbereich von -80°C bis +180°C, vorzugsweise -100°C bis +200°C, innerhalb des Prüfraums ausbildbar sein, wobei die Temperiervorrichtung eine Kühleinrichtung mit einem Kühlkreislauf mit einem Kältemittel, einem Wärmeübertrager, der in dem Prüfraum angeordnet ist, einem Verdichter, einem Kondensator und einem Expansionsorgan aufweist.

Die Temperiervorrichtung kann eine Heizeinrichtung mit einer Heizung und einem weiteren Wärmeübertrager, der in dem Prüfraum angeordnet ist, aufweisen. Die Heizeinrichtung kann beispielsweise eine elektrische Widerstandsheizung sein, die den Prüfraum beheizt, derart, dass über den weiteren Wärmeübertrager eine Temperaturerhöhung in dem Prüfraum möglich wird. Mittels einer Temperiervorrichtung, welche einen Wärmeübertrager zur Kühlung aufweist, kann mittels einer Regeleinrichtung der Steuervorrichtung eine Kühlung oder Erwärmung der im Prüfraum umgewälzten Luft gezielt gesteuert werden und eine Lufttemperatur innerhalb des Prüfraums in einem für einen Prüfablauf wesentlichen Temperaturbereich ausgebildet werden. Dabei kann unabhängig vom Prüfgut bzw. eines Betriebszustandes des Prüfguts eine zeitliche Temperaturkonstanz von +/-1 K, vorzugsweise +/-0,3 K bis

+/-0,5 K, während eines Prüfintervalls bzw. Prüfablaufs in dem Prüfraum ausgebildet werden. Unter einem Prüfintervall wird hier ein Zeitabschnitt eines vollständigen Prüfzeitraums verstanden, in dem das Prüfgut einer im Wesentlichen gleichbleibenden Temperatur oder Klimabedingung ausgesetzt wird.

Weitere vorteilhafte Ausführungsformen einer Prüfkammer ergeben sich aus den Merkmalsbeschreibungen der auf den Verfahrensanspruch 1 zurückbezogenen Unteransprüchen.

Nachfolgend wird eine bevorzugte Ausführungsform der Erfindung unter Bezugnahme auf die beigefügten Zeichnungen näher erläutert.

Es zeigen:
Fig. 1 Ein Zeit-Temperatur-Diagramm mit einer beispielhaften Darstellung von Temperaturverläufen;
Fig. 2 Eine schematische Darstellung einer Prüfkammer;
Fig. 3 Ein Zeit-Temperatur-Diagramm mit beispielhaften Temperaturverläufen;
Fig. 4 Ein Zeit-Temperatur-Diagramm mit beispielhaften Temperaturverläufen;
Fig. 5 Ein Zeit-Temperatur-Diagramm mit beispielhaften Temperaturverläufen.

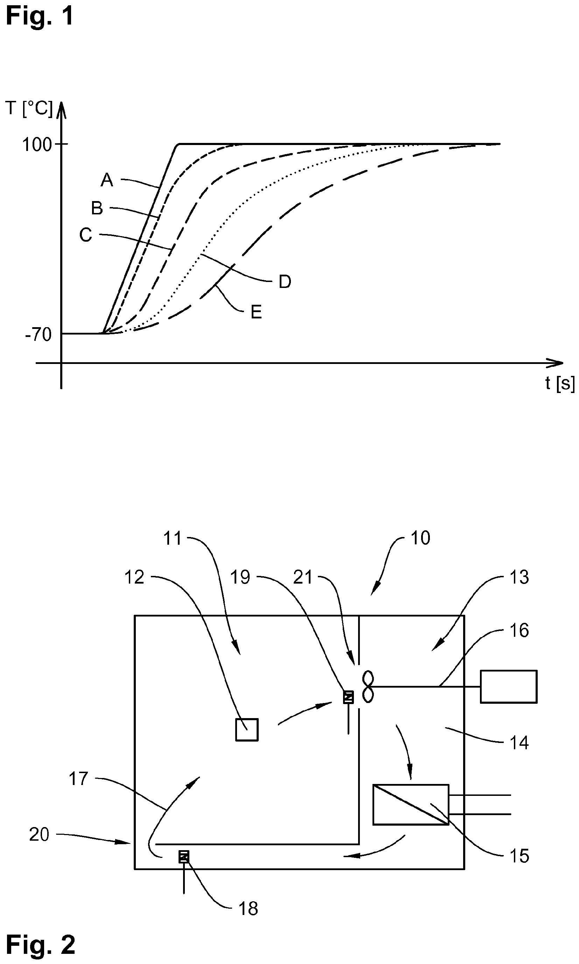

Die **Fig.1** zeigt ein Zeit-Temperatur-Liniendiagramm mit einer Darstellung verschiedener Temperaturverläufe beim Erwärmen von Prüflingen in einem Prüfraum einer Prüfkammer. Sämtliche Prüflinge weisen die gleiche Masse auf und wurden in dem Prüfraum einer Temperaturerhöhung von -70°C auf +100°C ausgesetzt. Die Temperaturverläufe wurden über Temperatursensoren, mit der Ausnahme des Temperaturverlaufs A, der die Lufttemperatur in dem Prüfraum widergibt, direkt am Prüfgut ermittelt, einer Steuervorrichtung der Prüfkammer ermittelt.

Nachfolgende Temperaturverläufe sind dargestellt:
A: Luft
B: Plattenprüfling
C: Kunststoffzylinder (außen)
D: Stahlzylinder
E: Kunststoffzylinder (innen).

Wie festzustellen ist, wird das zylindrische Prüfgut nur sehr langsam umtemperiert. Ein im Rahmen des Prüfablaufs vorgesehener Temperaturwechsel kann bei einem Erreichen eines oberen Temperaturhaltepunktes gemäß des Temperatursensors nach dem Temperaturverlauf A bereits möglich sein, ob schon das Prüfgut mit beispielsweise dem Temperaturverlauf D noch nicht ausreichend umtemperiert und damit entsprechend des Prüfablaufs thermisch belastet wurde.

Die **Fig.2** zeigt eine schematische Darstellung einer Prüfkammer 10, die einen Prüfraum 11 aufweist, in dem Prüfgut 12 angeordnet ist. In dem Prüfraum 11 ist weiter ein Umluftkanal 13 angeordnet, der einen Luftbehandlungsraum 14 im Prüfraum 11 ausbildet. In dem Luftbehandlungsraum 14 ist ein Wärmeübertrager 15 zur Erwärmung oder Kühlung der den Umluftkanal 13 durchströmenden Luft angeordnet. Dabei saugt ein Lüfter 16 die im Prüfraum 11 befindliche Luft an und leitet sie im Umluftkanal 13 zu dem Wärmeübertrager 15. Das Prüfgut 12 wird so von einem hier mit Pfeilen 17 dargestellten Luftstrom umströmt und einem definierten Temperaturwechsel ausgesetzt. Die Prüfkammer 10 verfügt über eine hier nicht dargestellte Steuervorrichtung mit einem Temperatursensor 18, mittels dem eine Lufttemperatur einer Zuluft am Auslass 20 des Umluftkanals 13 messbar ist. Ein weiterer Temperatursensor 19 der Steuervorrichtung ist an einem Einlass 21 des Umluftkanals 13 angeordnet, sodass hier eine Lufttemperatur einer Abluft innerhalb des Prüfraums 11 gemessen werden kann. Die Steuervorrichtung kann dann auch eine Temperaturdifferenz der Lufttemperatur der Zuluft und der Lufttemperatur der Abluft innerhalb eines Prüfzeitabschnittes erfassen, speichern und/oder verarbeiten.

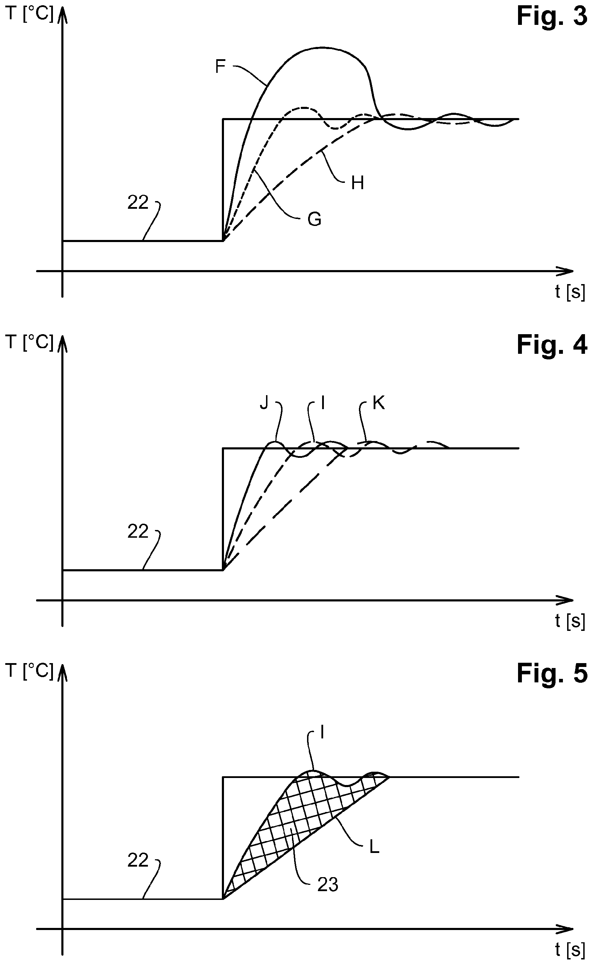

Die **Fig.3** zeigt ein Zeit-Temperatur-Liniendiagramm mit verschiedenen beispielhaften Temperaturverläufen. Sämtliche Temperaturverläufe wurden mit einem hier nicht dargestellten Temperatursensor einer Steuervorrichtung einer Prüfkammer zur Erfassung einer Lufttemperatur in einem Prüfraum der Prüfkammer gemessen. Die Linie 22 stellt einen Temperaturwechsel bzw. einen Temperatursprung einer Regeleinrichtung der Steuervorrichtung dar, der eine Lufttemperatur als einen Sollwert bzw. eine Führungsgröße der Regeleinrichtung vorgibt. Im vorliegenden Fall soll innerhalb des hier dargestellten Prüfzeitabschnittes eines vorgegebenen Prüfablaufs ein Temperaturwechsel von einer niedrigen Temperatur zu einer hohen Temperatur erfolgen. Aus dem mit dem Temperatursensor erfassten Temperaturverlauf F kann festgestellt werden, dass im Prüfraum befindliches Prüfgut selbst Wärme in den Prüfraum einträgt, da eine Erwärmung des Prüfguts zu schnell erfolgt. Entsprechend dem Temperaturverlauf G handelt es sich um leichtes, gut umströmtes Prüfgut und nach dem Temperaturverlauf H um schweres Prüfgut mit großer Masse und vergleichsweise kleiner Oberfläche, welches nur mit einer Verzögerung umtemperiert werden kann.

Die **Fig.4** zeigt im Unterschied zur **Fig.3** einen weiteren Temperaturverlauf der Lufttemperatur bei einem prüfgutfreien Prüfraum. Nach dem Temperaturverlauf J war eine Haltezeit einer Ausgangstemperatur vor dem Temperatursprung geringer als beim Temperaturverlauf I, sodass hier die Luft im Prüfraum insgesamt schneller erwärmt werden kann. Ein Einschwingverhalten der jeweiligen Temperaturverläufe I und J ist jeweils identisch. Bei dem Temperaturverlauf K befindet sich hingegen Prüfgut im Prüfraum, sodass aufgrund der umzutemperierenden Masse des Prüfguts eine Soll-Lufttemperatur mit einiger Verzögerung erreicht wird.

Aus den Temperaturverläufen I bis K ist ersichtlich, dass anhand einer Charakteristik eines Temperaturanstieges und eines Einschwingverhaltes Rückschlüsse auf einen Betrieb der Prüfkammer Bezogen werden können. Insbesondere ist ein Anstieg einer Aufheizgeschwindigkeit aufgrund der zu erwartbaren Linearität einfach durch die Steuervorrichtung bestimmbar. Ist dieser Anstieg kleiner als der Anstieg, der während des Prüfablaufs mit dem prüfgutfreien Prüfraum ermittelt wurde, befindet sich Prüfgut in der Prüfkammer. Die Art des Prüfguts kann entsprechend der Temperaturverläufe F bis H aus der Fig. 3 von der Steuervorrichtung bestimmt werden. Entspricht hingegen der Temperaturverlauf den Temperaturverlauf mit dem prüfgutfreien Prüfraum befindet sich kein Prüfgut im Prüfraum oder ein Einfluss des Prüfguts auf den Prüfablauf ist vernachlässigbar. Ist ein Anstieg der Aufheizgeschwindigkeit größer als während des Prüfablaufs mit dem prüfgutfreien Prüfraum, war eine Haltezeit einer Temperatur vor einem Temperaturwechsel gemäß der Linie 22 bzw. einem Sollwertwechsel größer als bei der Ermittlung des Referenz-Temperaturverlaufs mit dem prüfgutfreien Prüfraum. Liegt ein Einschwingverhalten im Bereich der Soll-Lufttemperatur unter dem Soll-Temperaturwert, handelt es sich um einen Prüfablauf mit Prüfgut, welches ein Überschwingen des Temperaturverlaufs beim Aufheizen dämpft. Die entsprechenden Temperaturverläufe sind auch auf eine Abkühlung von Prüfgut übertragbar und können somit einen Richtwert für eine Abkühlphase bilden. Insgesamt ist es so möglich für eine Bedienperson durch einen Vergleich der jeweiligen Temperaturverläufe mit und ohne Prüfgut im Prüfraum festzustellen, ob Prüfgut im Prüfraum entsprechend eines vorausgesetzten, vorbestimmten Prüfablaufs temperiert wird. Eine Anpassung des Prüfablaufs kann durch die Bedienperson selbst oder durch die Steuervorrichtung mittels einer Regeleinrichtung erfolgen.

Die **Fig.5** zeigt im Unterschied zur **Fig.4** den Temperaturverlauf I zusammen mit einem Temperaturverlauf L. Der Temperaturverlauf I stellt eine Lufttemperatur einer Zuluft des Prüfraums und der Temperaturverlauf L eine Lufttemperatur einer Abluft innerhalb des Prüfraums dar. Die dazwischen liegende Fläche 23 entspricht einem Versatz bzw. einer Differenz beider Temperaturverläufe I und L. In allen Fällen wird die Lufttemperatur der Zuluft bei einem Aufheizen des Prüfraums stets größer sein als eine Lufttemperatur einer Abluft, sodass sich hier stets eine Fläche 23 ergibt. Wird die Messung mit Prüfgut im Prüfraum vorgenommen, vergrößert sich auch die Fläche 23 weiter. Anhand eines Versatzes der dann jeweiligen Temperaturverläufe und der Größe der Fläche kann festgestellt werden, ob es sich um ein sehr leichtes, schweres und gut oder schlecht umströmtes Prüfgut handelt. Durch die Messung der Lufttemperatur der Zuluft und der gleichzeitigen Messung der Lufttemperatur der Abluft wird es möglich, den Einfluss des Prüflings auf den Prüfablauf noch genauer zu bestimmen.

Ein unmittelbares Anbringen von Temperatursensoren am Prüfgut ist nicht mehr erforderlich. Auch kann sicher festgestellt werden, ob das Prüfgut entsprechend einer normativen Vorgabe den gewünschten thermischen Beanspruchungen im Rahmen des Prüfablaufs ausgesetzt wird.

## Patentansprüche

1. Verfahren zur Temperierung von Prüfgut in einer Prüfkammer (10), insbesondere Klimakammer, wobei eine Einstellung einer Lufttemperatur in einem Prüfraum (11) der Prüfkammer mittels einer Steuervorrichtung der Prüfkammer gesteuert wird, wobei in dem Prüfraum Prüfgut (12) angeordnet und entsprechend einem vorbestimmten Prüfablauf in einem Prüfzeitabschnitt ein Temperaturwechsel im Prüfraum ausgebildet wird, wobei mittels eines Temperatursensors (18, 19) der Steuervorrichtung die Lufttemperatur in dem Prüfraum erfasst wird,
**dadurch gekennzeichnet,**
**dass** ein Temperaturverlauf (F, G, H, K) der Lufttemperatur während des Prüfzeitabschnitts mit in dem Prüfraum angeordnetem Prüfgut von der Steuervorrichtung erfasst und gespeichert wird, wobei in dem prüfgutfreien Prüfraum entsprechend dem vorbestimmten Prüfablauf in einem weiteren Prüfzeitabschnitt der Temperaturwechsel im Prüfraum ausgebildet wird, wobei ein weiterer Temperaturverlauf (A, I, J, L) der Lufttemperatur während des weiteren Prüfzeitabschnitts mit dem prüfgutfreien Prüfraum von der Steuervorrichtung erfasst und gespeichert wird, wobei mittels der Steuervorrichtung ein Vergleich der jeweiligen Temperaturverläufe durchgeführt wird.

2. Verfahren nach Anspruch 1,
**dadurch gekennzeichnet,**
**dass** die Steuervorrichtung eine Differenz der jeweiligen Temperaturverläufe (A, F, G, H, I, J, K, L) bestimmt.

3. Verfahren nach Anspruch 1 oder 2,
**dadurch gekennzeichnet,**
**dass** die Steuervorrichtung eine Geschwindigkeit und/oder eine Regelabweichung des Temperaturwechsels bestimmt.

4. Verfahren nach Anspruch 3,
**dadurch gekennzeichnet,**
**dass** der Vergleich der Temperaturverläufe (A, F, G, H, I, J, K, L) für die jeweiligen Geschwindigkeiten und/oder Regelabweichungen der Temperaturwechsel durchgeführt wird.

5. Verfahren nach Anspruch 3 oder 4,
**dadurch gekennzeichnet,**
**dass** die Steuervorrichtung anhand der Geschwindigkeit und/oder Regelabweichung des Temperaturwechsels eine Wärmekapazität des Prüfguts (12) bestimmt.

6. Verfahren nach einem der Ansprüche 3 bis 5,
**dadurch gekennzeichnet,**
**dass** die Steuervorrichtung anhand der Geschwindigkeit und/oder Regelabweichung des Temperaturwechsels eine Wärmeleistung des Prüfguts (12) bestimmt.

7. Verfahren nach einem der Ansprüche 3 bis 6,
**dadurch gekennzeichnet,**
**dass** die Steuervorrichtung anhand der Geschwindigkeit und/oder Regelabweichung des Temperaturwechsels eine Dauer einer konstanten Temperierung des Prüfguts in einem vorangehenden Prüfzeitabschnitt bestimmt.

8. Verfahren nach einem der vorangehenden Ansprüche,
**dadurch gekennzeichnet,**
**dass** der Temperaturwechsel von einer hohen Lufttemperatur zu einer niedrigen Lufttemperatur erfolgt oder umgekehrt.

9. Verfahren nach einem der vorangehenden Ansprüche,
**dadurch gekennzeichnet,**
**dass** Lufttemperaturwerten jeweils Zeitwerte innerhalb eines Prüfzeitabschnitts zugeordnet werden, wobei die Lufttemperaturwerte und die Zeitwerte als Messdatensätze in einer Speichereinrichtung der Steuervorrichtung gespeichert werden.

10. Verfahren nach einem der vorangehenden Ansprüche,
**dadurch gekennzeichnet,**
**dass** in einem ersten Schritt der weitere Temperaturverlauf (A, I, J, L) der Lufttemperatur während des weiteren Prüfzeitabschnitts mit dem prüfgutfreien Prüfraum (11) und in einem zweiten Schritt der Temperaturverlauf (F, G, H, K) der Lufttemperatur während des Prüfzeitabschnitts mit in dem Prüfraum angeordneten Prüfgut (12) von der Steuervorrichtung erfasst und gespeichert wird.

11. Verfahren nach einem der vorangehenden Ansprüche,
**dadurch gekennzeichnet,**
**dass** in einer Datenbank der Steuervorrichtung eine Vielzahl unterschiedlicher Temperaturverläufe (A, F, G, H, I, J, K, L) der Lufttemperatur während Prüfzeitabschnitten mit dem prüfgutfreien Prüfraum (11) gespeichert wird.

12. Verfahren nach einem der vorangehenden Ansprüche,
**dadurch gekennzeichnet,**
**dass** mittels einer Regeleinrichtung der Steuervorrichtung während des Prüfzeitabschnitts mit in dem Prüfraum angeordnetem Prüfgut (12) die Lufttemperatur in dem Prüfraum (11) in Abhängigkeit des Vergleichs angepasst wird.

13. Verfahren nach Anspruch 12,
**dadurch gekennzeichnet,**
**dass** die Regeleinrichtung in Abhängigkeit des Vergleichs eine Dauer einer konstanten Temperierung des Prüfguts (12) in dem Prüfzeitabschnitt verlängert oder verkürzt.

14. Verfahren nach Anspruch 12 oder 13,
**dadurch gekennzeichnet,**
**dass** die Regeleinrichtung in Abhängigkeit des Vergleichs eine Geschwindigkeit des Temperaturwechsels der Lufttemperatur in dem Prüfraum (11) in dem Prüfzeitabschnitt vermindert oder erhöht.

15. Verfahren nach einem der vorangehenden Ansprüche,
**dadurch gekennzeichnet,**
**dass** mittels des Temperatursensors (18) eine Lufttemperatur einer Zuluft und mittels eines weiteren Temperatursensors (19) der Steuervorrichtung eine Lufttemperatur einer Abluft innerhalb des Prüfraums (11) gemessen wird, wobei mittels der Steuervorrichtung eine Temperaturdifferenz der Lufttemperatur der Zuluft und der Lufttemperatur der Abluft innerhalb des Prüfzeitabschnitts erfasst, gespeichert und/oder verarbeitet wird.

16. Verfahren nach Anspruch 15,
**dadurch gekennzeichnet,**
**dass** mittels der Steuervorrichtung ein Vergleich der jeweiligen Temperaturverläufe der Lufttemperatur der Zuluft und ein Vergleich der jeweiligen Temperaturverläufe der Lufttemperatur der Abluft durchgeführt werden.

17. Verwendung eines Temperatursensors (18, 19) einer Steuervorrichtung einer Prüfkammer (10), insbesondere einer Klimakammer, zur Erfassung einer Lufttemperatur in einem Prüfraum (11) der Prüfkammer und zur Durchführung eines Verfahrens nach einem der vorangehenden Ansprüche.

18. Prüfkammer (10) zur Temperierung von Prüfgut, insbesondere Klimakammer, umfassend einen Prüfraum (11), eine Steuervorrichtung, und einen Temperatursensor (18, 19), wobei eine Einstellung einer Lufttemperatur in dem Prüfraum (11) der Prüfkammer mittels der Steuervorrichtung der Prüfkammer steuerbar ist, wobei in dem Prüfraum Prüfgut (12) anordbar und entsprechend einem vorbestimmten Prüfablauf in einem Prüfzeitabschnitt ein Temperaturwechsel im Prüfraum ausbildbar ist, wobei mittels des Temperatursensors (18, 19) der Steuervorrichtung die Lufttemperatur in dem Prüfraum erfassbar ist,
**dadurch gekennzeichnet,**
**dass** ein Temperaturverlauf (F, G, H, K) der Lufttemperatur während des Prüfzeitabschnitts mit in dem Prüfraum angeordnetem Prüfgut von der Steuervorrichtung erfassbar und speicherbar ist, wobei in dem prüfgutfreien Prüfraum entsprechend dem vorbestimmten Prüfablauf in einem weiteren Prüfzeitabschnitt der Temperaturwechsel im Prüfraum ausbildbar ist, wobei ein weiterer Temperaturverlauf (A, I, J, L) der Lufttemperatur während des weiteren Prüfzeitabschnitts mit dem prüfgutfreien Prüfraum von der Steuervorrichtung erfassbar und speicherbar ist, wobei mittels der Steuervorrichtung ein Vergleich der jeweiligen Temperaturverläufe durchführbar ist.

19. Prüfkammer nach Anspruch 18,
**dadurch gekennzeichnet,**
**dass** mittels einer Temperiervorrichtung der Prüfkammer (10) eine Lufttemperatur in einem Temperaturbereich von -80 °C bis +180 °C, vorzugsweise -100 °C bis +200 °C, innerhalb des Prüfraums (12) ausbildbar ist, wobei die Temperiervorrichtung eine Kühleinrichtung mit einem Kühlkreislauf mit einem Kältemittel, einem Wärmeübertrager, der in dem Prüfraum angeordnet ist, einem Verdichter, einem Kondensator und einem Expansionsorgan aufweist.

20. Prüfkammer nach Anspruch 18 oder 19,
**dadurch gekennzeichnet,**
**dass** die Temperiervorrichtung eine Heizeinrichtung mit einer Heizung und einem weiteren Wärmeübertrager, der in dem Prüfraum angeordnet ist, aufweist.

## Claims

1. A method for controlling the temperature of test material in a test chamber (10), in particular a climate chamber, a setting of an air temperature in a test space (11) of the test chamber being controlled by means of a control device of the control chamber, test material (12) being disposed in the test space and a change in temperature being realised in the test space in a test period according to a predetermined test sequence, the air temperature in the test space being recorded by means of a temperature sensor (18, 19) of the control device,
**characterised in that**
a temperature curve (F, G, H, K) of the air temperature being recorded and stored by the control device during the test period with test material disposed in the test space, the change in temperature being realised in the test space in another test period in the test space without test material according to the predetermined test sequence, another temperature curve (A, I, J, L) of the air temperature being recorded and stored by the control device during the other test period with the test space without test material, the respective temperature curves being compared by means of the control device.

2. The method according to claim 1,
**characterised in that**
the control device determines a difference of the respective temperature curve (A, F, G, H, I, J, K, L).

3. The method according to claim 1 or 2,
**characterised in that**
the control device determines a speed and/or a deviation of the change in temperature.

4. The method according to claim 3,
**characterised in that**
the temperature curves (A, F, G, H, I, J, K, L) are compared for the respective speeds and/or deviations of the change in temperature.

5. The method according to claim 3 or 4,
**characterised in that**
the control device determines a heat capacity of the test material (12) based on the speed and/or the deviation of the change in temperature.

6. The method according to any one of the claims 3 to 5,
**characterised in that**
the control device determines a heat performance of the test material (12) based on the speed and/or the deviation of the change in tem perature.

7. The method according to any one of the claims 3 to 6,
**characterised in that**
the control device determines a duration of a constantly controlled temperature of the test material in a preceding test period based on the speed and/or the deviation of the change in temperature.

8. The method according to any one of the preceding claims,
**characterised in that**
the temperature changes from a high air temperature to a low air temperature or vice versa.

9. The method according to any one of the preceding claims,
**characterised in that**
air temperature values are each allocated time values within a test period, the air temperature values and the time values being stored as measuring datasets in a control means of the control device.

10. The method according to any one of the preceding claims,
**characterised in that**
the other temperature curve (A, I, J, L) of the air temperature is recorded and stored by the control device in a first step during the other test period with the test space (11) without test material (12), and the temperature curve (F, G, H, K) of the air temperature is recorded and stored by the control device in a second step during the test period with the test material disposed in the test space.

11. The method according to any one of the preceding claims,
**characterised in that**
a plurality of different temperature curves (A, F, G, H, I, J, K, L) of the air temperature is stored in a databank of the control device during the test periods with the test space (11) without test material (12).

12. The method according to any one of the preceding claims,
**characterised in that**
as a function of the comparison, the air temperature in the test space (11) is adjusted by means of a control means of the control device during the test period with test material (12) disposed in the test space.

13. The method according to claim 12,
**characterised in that**
the control means prolongs or shortens a duration of a constantly controlled temperature of test material (12) as a function of the comparison in the test period.

14. The method according to claim 12 or 13,
**characterised in that**
the control means reduces or increases a speed of the change in the air temperature in the test space (11) in the test period as a function of the comparison.

15. The method according to any one of the preceding claims,
**characterised in that**
a supply air temperature is measured within the test space (11) by means of the temperature sensor (18) and a waste air temperature is measured within the test space (11) by means of another temperature sensor (19) of the control device, a difference in the supply air temperature and the waste air temperature is recorded, stored and/or processed within the test period by means of the control device.

16. The method according to claim 15,
**characterised in that**
the respective temperature curves of the supply air temperature is compared by means of the control device and the respective temperature curves of the waste air temperature is compared by means of the control device.

17. A use of a temperature sensor (18, 19) of a control device of a test chamber (10), in particular a climate chamber, for recording an air temperature in a test space (11) of the test chamber and for conducting a method according to any one of the preceding claims.

18. A test chamber (10) for controlling the temperature of test material, in particular a climate chamber, the test chamber comprising a test space (11), a control device and a temperature sensor (18, 19), a setting of an air temperature in the test space (11) of the test chamber being controlled by means of the control device of the control chamber, test material (12) being disposed in the test space and a change in temperature being realised in the test space in a test period according to a predetermined test sequence, the air temperature in the test space being recorded by means of the temperature sensor (18, 19) of the control device,
**characterised in that**
a temperature curve (F, G, H, K) of the air temperature is recorded and stored by the control device during the test period with test material disposed in the test space, the change in temperature being realised in the test space in another test period in the test space without test material according to the predetermined test sequence, another temperature curve (A, I, J, L) of the air temperature being recorded and stored by the control device during the other test period with the test space without test material, the respective temperature curves being compared by means of the control device.

19. The test chamber according to claim 18,
**characterised in that**
an air temperature ranging from -80 °C to +180 °C, preferably - 100 °C to +200 °C, in temperature is realised within the test space (12) by means of a temperature control device of the test chamber (10), the temperature control device comprising a cooling device having a cooling cycle having a refrigerant, a heat exchanger disposed in the test space, a compressor, a condenser and an expansion means.

20. The test chamber according to claim 18 or 19,
**characterised in that**
the temperature control device comprises a heating device having a heater and another heat exchanger disposed in the test chamber.

## Revendications

1. Procédé pour la commande d'une température d'un matériau d'essai dans une chambre d'essai (10), notamment une chambre climatique, un calibrage d'une température d'air dans un espace d'essai (11) de la chambre d'essai étant commandé au moyen d'un dispositif de commande de la chambre d'essai, le matériau d'essai (12) étant disposé dans l'espace d'essai et un changement de température étant réalisé dans l'espace d'essai dans une période d'essai selon une séquence d'essai prédéterminée, la température d'air dans l'espace d'essai étant enregistrée au moyen d'un capteur de température (18, 19) du dispositif de commande,
**caractérisé en ce**
**qu'**une courbe (F, G, H, K) de la température d'air est enregistrée et stockée par le dispositif de commande pendant la période d'essai avec le matériau d'essai disposé dans l'espace d'essai, le changement de température étant réalisé dans l'espace d'essai dans une autre période d'essai dans l'espace d'essai sans matériau d'essai selon la séquence d'essai prédéterminée, une autre courbe (A, I, J, L) de la température d'air étant enregistrée et stockée par le dispositif de commande pendant l'autre période d'essai avec l'espace d'essai sans matériau d'essai, les courbes de température respectives étant comparées au moyen du dispositif de commande.

2. Procédé selon la revendication 1,
**caractérisé en ce que**
le dispositif de commande détermine une différence de la courbe de température (A, F, G, H, I, J, K, L) respective.

3. Procédé selon la revendication 1 ou 2,
**caractérisé en ce que**
le dispositif de commande détermine une vitesse et/ou un écart de réglage du changement de température.

4. Procédé selon la revendication 3,
**caractérisé en ce que**
les courbes de température (A, F, G, H, I, J, K, L) sont comparées pour les vitesse respectives et/ou les écarts de réglage respectifs du changement de température.

5. Procédé selon la revendication 3 ou 4,
**caractérisé en ce que**
le dispositif de commande détermine une capacité thermique du matériau d'essai (12) sur la base de la vitesse et/ou sur la base de l'écart de réglage du changement de température.

6. Procédé selon l'une quelconque des revendications 3 à 5,
**caractérisé en ce que**
le dispositif de commande détermine une puissance thermique du matériau d'essai (12) sur la base de la vitesse et/ou sur la base de l'écart de réglage du changement de température.

7. Procédé selon l'une quelconque des revendications 3 à 6,
**caractérisé en ce que**
le dispositif de commande détermine une durée d'une température commandée constamment du matériau d'essai dans une période d'essai précédente sur la base de la vitesse et/ou sur la base de l'écart de réglage du changement de température.

8. Procédé selon l'une quelconque des revendications précédentes,
**caractérisé en ce que**
la température change à partir d'une haute température d'air vers une basse température d'air ou vice versa.

9. Procédé selon l'une quelconque des revendications précédentes,
**caractérisé en ce que**
des valeurs de température d'air sont chacune associées à des valeurs de temps dans une période d'essai, les valeurs de température d'air et les valeurs de temps étant stockées dans une mémoire du dispositif de commande comme jeux de données mesurées.

10. Procédé selon l'une quelconque des revendications précédentes,
**caractérisé en ce que**
l'autre courbe (A, I, J, L) de la température d'air est enregistrée et stockée par le dispositif de commande dans une première étape pendant l'autre période d'essai avec l'espace d'essai (11) sans matériau d'essai (12), et la courbe (F, G, H, K) de la température d'air est enregistrée et stockée par le dispositif de commande dans une deuxième étape pendant la période d'essai avec le matériau d'essai disposé dans l'espace d'essai.

11. Procédé selon l'une quelconque des revendications précédentes,
**caractérisé en ce**
**qu'**une pluralité des courbes (A, F, G, H, I, J, K, L) différentes de la température d'air est stockée dans une banque de donnée du dispositif de commande pendant les période d'essai avec l'espace d'essai (11) sans matériau d'essai (12).

12. Procédé selon l'une quelconque des revendications précédentes,
**caractérisé en ce que**
la température d'air dans l'espace d'essai (11) est ajustée en fonction de la comparaison au moyen du moyen de commande du dispositif de commande pendant la période d'essai avec le matériau d'essai (12) disposé dans l'espace d'essai.

13. Procédé selon la revendication 12,
**caractérisé en ce que**
le moyen de commande prolonge ou réduit une durée d'une température commandée constamment du matériau d'essai (12) dans la période d'essai en fonction de la comparaison.

14. Procédé selon la revendication 12 ou 13,
**caractérisé en ce que**
le moyen de commande réduit ou augmente une vitesse du changement de la température d'air dans l'espace d'essai (11) dans la période d'essai en fonction de la comparaison.

15. Procédé selon l'une quelconque des revendications précédentes,
**caractérisé en ce**
**qu'**une température de l'air frais est mesurée dans l'espace d'essai (11) au moyen du capteur de température (18) et une température de l'air vicié est mesurée dans l'espace d'essai (11) au moyen d'un autre capteur de température (19) du dispositif de commande, une différence de température de l'air frais et de l'air vicié étant enregistrées, stockées et/ou traitées dans la période d'essai au moyen du dispositif de commande.

16. Procédé selon la revendication 15,
**caractérisé en ce que**
les courbes respectives de la température de l'air frais sont comparées au moyen du dispositif de commande et les courbes respectives de la température de l'air vicié sont comparées au moyen du dispositif de commande.

17. Usage d'un capteur de température (18, 19) d'un dispositif de commande d'une chambre d'essai (10), notamment une chambre climatique, pour l'enregistrement d'une température d'air dans un espace d'essai (11) d'une chambre d'essai et pour l'exécution d'un procédé selon l'une quelconque des revendications précédentes.

18. Chambre d'essai (10) pour la commande de la température du matériau d'essai, notamment une chambre climatique, un calibrage d'une température d'air dans un espace d'essai (11) de la chambre d'essai étant commandé au moyen d'un dispositif de commande dans la chambre d'essai, le matériau d'essai (12) étant disposé dans l'espace d'essai et un changement de température étant réalisé dans l'espace d'essai dans une période d'essai selon une séquence d'essai prédéterminée, la température d'air dans l'espace d'essai étant enregistrée au moyen d'un capteur de température (18, 19) du dispositif de commande,
**caractérisé en ce**
**qu'**une courbe (F, G, H, K) de la température d'air est enregistrée et stockée par le dispositif de commande pendant la période d'essai avec le matériau d'essai disposé dans l'espace d'essai, le changement de température étant réalisé dans l'espace d'essai dans une autre période d'essai dans l'espace d'essai sans matériau d'essai selon la séquence d'essai prédéterminée, une autre courbe (A, I, J, L) de la température d'air étant enregistrée et stockée par le dispositif de commande pendant l'autre période d'essai avec l'espace d'essai sans matériau d'essai, les courbes de température respectives étant comparées au moyen du dispositif de commande.

19. Chambre d'essai selon la revendication 18,
**caractérisé en ce**
**qu'**une température d'air de -80 °C à +180 °C, de préférence de -100 °C à +200 °C, est réalisée dans l'espace d'essai (12) au moyen d'un dispositif de commande de température de la chambre d'essai (10), le dispositif de commande de température comprenant un dispositif de refroidissement ayant un cycle de refroidissement ayant un agent réfrigérant, un échangeur de chaleur disposé dans l'espace d'essai, un compresseur, un condenseur et un moyen de détente.

20. Chambre d'essai selon la revendication 18 ou 19,
**caractérisé en ce que**
le dispositif de commande de température comprend un dispositif de chauffage ayant un chauffage et un autre échangeur de chaleur disposé dans la chambre d'essai.
